# EUROPÄISCHE PATENTSCHRIFT

(11) **EP 0 784 134 B1**
(45) Veröffentlichungstag und Bekanntmachung des Hinweises auf die Patenterteilung: **01.03.2006**
(21) Anmeldenummer: 97200023.6
(22) Anmeldetag: 15.01.1997
(51) Int. Cl.: E04G 17/06

(54) **Schalungssystem**
Shuttering arrangement
Système de coffrage

(30) Priorität: 15.01.1996 NL 1002095
(43) Veröffentlichungstag der Anmeldung: 16.07.1997
(73) Patentinhaber: Van Rijn, Gerardus, NL-3648 CL Wilnis (NL)
(72) Erfinder: Van Rijn, Gerardus, NL-3648 CL Wilnis (NL)
(74) Vertreter: Ferguson, Alexander

(56) Entgegenhaltungen:
- EP-A- 0 128 626
- DE-A- 3 924 773
- DE-B- 1 040 851
- DE-C- 28 628
- DE-C- 531 748
- NL-A- 7 908 737
- US-A- 2 270 448
- US-A- 3 572 414

## Beschreibung

Die Erfindung bezieht sich auf ein Schalungssystem für aus Gussbeton zu bildenden Bauteile, wie Wände. Solche Schalungssysteme haben normalerweise zwei auf Abstand von einander aufzustellenden Schalungswände und Abstandshalter, die die Schalungswände auf einen erwünschten Abstand voneinander halten, vor und während des Betongusses und während des Abbindens des Betons. Auch können die voll zu giessenden Hohlräume durch eine bereits vorhandene Gebäudewand (beispielsweise aus Beton) und eine vor Ort einzustellenden Schalungswand begrenzt sein.

Ein Schalungssystem gemäß dem Oberbegriff des Anspruchs 1 ist aus NL-A-79 08 737 bekannt.

Früher wurden für das Herstellen von den Schalungswänden Bretter und später Trennwände benutzt. Diese wurden mit Holzständern und Querholmen zu soliden Schalungswänden gebildet. Die Abstandshalter bestanden unter anderem aus mit Gewinde versehenen Stiften, die durch beide Schalungswände hindurchgestochen wurden und sowohl an der Innenseite der betreffenden Schalungswand, als an der Aussenseite davon hinsichtlich der betreffenden Schalungswand festgesetzt wurden. Die Stifte der Abstandshalter waren von der Stahlqualität st.37 mit einem metrischen Gewinde, worauf metrische Muttern bis zum stabilen Angriff mit der Aussenseite der Schalungswand angezogen werden konnten. An der Innenseite wurden die Schalungswände mittels auf die Stifte festgelegter Stahl-, Kunststoff- oder Betonkegel zurückgehalten.

Trotz der Tatsache, dass viele Teile der Schalungswand aus Holz waren, konnten die Abstandshalter während des Betonsgusses Schwingungen ausgesetzt sein, es konnte jedoch zwischen Mutter und Stiftgewinde und zwischen Mutter und Verschalung ausreichende Reibung entwickelt werden, damit die Mutter am Platze blieb.

Aus Kostenüberlegungen und aus dem Gesichtspunkt der Optimalisation der Qualität der Betonkonstruktion hat man sich bemüht, so wenig Stifte wie möglich durch die zu bildenden Konstruktion hindurchstechen zu lassen. Unter anderem aus diesem Grund werden stets häufiger Systemschalungen eingesetzt, wobei relativ sehr grosse Schalungstrennwände aus Holz oder Stahl mit einem verstärkten Rahmen aus Eisen oder Aluminium an der Aussenseite verwendet wird. Die an der Aussenseite auf die Stift des Abstandhalters geschraubte Mutter wird deshalb mit der Aussenseite der Schalung selbst oder mit einer - dazwischen aufgestellten - Anker-, Voll- oder Unterlegplatte aus Stahl ein Metall-auf-Metallkontakt machen.

Bei diesen Systemschalungen werden weiterhin Stifte verwendet, auch Zentrierstifte genannt, aus hochwertigem Eisen, dessen Gewinde eine relative grosse Steigung hat und die Rippe des Gewindes auf dem Stift unterbrochen sein kann, wie bei Beton oder Spannstahl (siehe beispielsweise DE-A-31.31.078). Der üblichste Stift hat einen runden Durchmesser von 15 mm mit einem Gewinde mit einer Steigung von 10 mm (Gebrauchsbelastung 90 kN; Bruchbelastung 190 kN). Ein anderer Stift hat eine Steigung von 18 mm bei einem Durchmesser von 36 mm. Solche Zentrierstifte haben den Vorteil, dass die Muttern schnell aufgeschraubt werden können und dass Betonreste, die während des Gusses über die Schalungswand gekleckert sind, einfach während des Abdrehens der Mutter von den Zentrierstiften davon zu entfernen sind, wenn die Schalung wieder entfernt wird. Solche Zentrierstifte sind unter dem registrierten Warenzeichen "Dywidag" erhältlich und sind zum Beispiel in DIN 18216 beschrieben.

Ein Nachteil der groben Steigung ist allerdings, dass die aufgeschraubten Muttern sich einfach lockern können.

Dies kann dann passieren, wenn die Schalungsplatten während des Errichtens nicht ganz richtig stehen, zum Beispiel. In einem solchen Fall wird man mit dem Kran, der für das Errichten der Schalungswände verwendet wird, die Wand dann nach oben, nach unten, nach links und nach rechts bewegen lassen. Gleichzeitig werden die durch Keilen und Klemmen gebildeten Verbindungen mit den danebengelegenen Schalungswänden angeschlagen werden. Hierbei werden Schwingungen frei, die das Lockern der bereits aufgestellten Flügelmutter fördern.

Schwingungen werden auch während und nach dem Giessen des Betons frei, wenn der Beton mit Hilfe von Betoninnenrüttlern verdichtet wird. Wenn der Betoninnenrüttler mit einem Abstandshalter Kontakt macht, ist die Aussicht gross, dass sich die darauf geschraubte Mutter lockert. Dasselbe kann passieren, wenn mit Rüttelblöcken, die direkt auf die Schalungswände angreifen, gearbeitet wird. Heutzutage muss stets kräftiger gerüttelt werden, aufgrund der bestehenden Tendenz dickere Betonarten zu verwenden.

Wenn in der Systemschalung eine Mutter gelockert ist, wird die Wanddicke örtlich einigermassen abweichen. Es ist ernsthafter, aber, wenn die benachbarten Abstandshalter, die einen (grossen) Teil der Belastung des Abstandshalters mit gelockerter Mutter übernehmen müssen, dies nicht halten können und brechen. Dann wird die Wand dort eine gut sichtbare Verdickung bilden. Es ist sogar nicht ausgeschlossen, dass die gesamte Schalung auseinanderspringt. Insbesondere beim Hochbau kann dies für den Arbeiter eine Gefahr bilden.

Ferner spielt eine Rolle, dass während des Gusses eine beträchtliche statische Belastung auftritt. Wo der Beton bereits vorhanden ist, werden erhebliche horizontale Kräfte auf die Schalungswände ausgeübt werden, wodurch die Schalungswand an der Oberseite die Tendenz hat, nach innen zu stehen, trotz des Vorhandenseins der Abstandshalter. Die Schalungswand tendiert dabei ausserdem zum Hinauftreiben. Diese Kräfte sind beträchtlich, insbesondere bei Systemschalungen.

Um soviel wie möglich die obenerwähnten Probleme vorwegzunehmen, ist die Tendenz da, die Mutter so straff wie möglich anzuziehen oder anzuschlagen. Hierbei werden die Konusse der Abstandshalter, die gegen die Innenseite der Schalungswand anliegen, gegen die Innenwand der Schalung angezogen, wodurch dort an der Schalungswand eine Beschädigung eintreten kann und sie nicht mehr so gut aufs neue zu verwenden ist. Alternativerweise können die Konusse verformen, besonders wenn diese aus Kunststoff sind, wodurch allerdings eine örtliche Abweichung in der Wanddicke entstehen wird.

Regelmässige Inspektion der (vielen: oft 2 pro m² an jeder Seite) Mutter ist dabei zeitraubend und oft nicht gut ausführbar.

Um gegen das Lockern der Muttern auf die Zentrierstifte mit grosser Steigung anzugehen hat man bis jetzt eine zusätzliche Gegenmutter verwendet, Klebeband hinter der Mutter angebracht um sie zurückzuhalten oder erst ein Gummiband auf die Zentrierstift aufgestellt um die Mutter darüber zu drehen. Solche Lösungen sind allerdings umständlich und/oder nicht ausreichend zuverlässig.

Aufgabe der Erfindung ist es darin eine Verbesserung zu bringen und die Erfindung verschafft hierzu ein Schalungssystem wie in Anspruch 1 beschrieben.

Die Anordnung von Mutter und elastischem Mittel kann einfach auf den Stift aufgestellt und darauf geschraubt werden, bis die Anschlagsoberfläche gegen die Schalungswand, auf direkte oder indirekte Weise (via eine Stahlfolgeplatte, zum Beispiel) zum Anschlag gekommen ist. Überdies wird auch das elastische Mittel zusammengedrückt sein, wodurch die Mutter mit Kraft in auswärtige axiale Richtung gedrückt wird und im Schwingungsfall gedrückt bleibt. Das elastische Mittel kann dabei auch durch Reibung in Umfangsrichtung mit Schalungswand/Folgeplatte einerseits und mit Mutter andererseits einen Beitrag zur Vorbeugung von Rotationsbewegungen der Mutter leisten.

Vorzugsweise befindet sich die Anschlagsoberfläche radial innerhalb des elastischen Mittels. Im Falle eines relativ kleinen Durchmessers der Anschlagsoberfläche kann es dann wünschenswert sein, eine vorzugsweise Stahlfolgeplatte zwischen der Schalungswand und der Anschlagoberfläche anzuordnen.

Vorzugsweise ist die Mutter mit einem Angriffsflügel oder -flansch versehen, der auf axialen auswärtigen Abstand von der Anschlagsoberfläche gelegen ist und bestimmt die Mutter zwischen der Anschlagsoberfläche und dem Flügel oder dem Flansch einen ersten Mutterabschnitt, der vorzugsweise mit einem mit der Stift zusammenarbeitenden Gewinde versehen ist, wobei das elastische Mittel um den ersten Mutterabschnitt gelegen ist. Hierdurch bleibt das elastische Mittel einfach am Platze, und ist auch einfach festzustellen, dass das elasischen Mittel tatsächlich vorhanden ist.

Eine alternative Aufstellung ist jene, wobei das elastische Mittel radial innerhalb der Anschlagsoberfläche gelegen ist. In einem solchen Fall ist die Anschlagsoberfläche dermassen gross, dass eine Folgeplatte überflüssig ist. Die Mutter kann dabei wieder mit einem Angriffsflügel oder Flansch versehen sein, der dann zugleich die Anschlagsoberfläche bildet.

Das elastische Mittel kann auf verschiedene Weise ausgebildet sein. Es kann beispielsweise als eine Gummimanchette oder einen Gummiring gebildet sein, die oder der im Hinblick auf maximale Wiederverwendungsmöglichkeiten auf die Oberflächen, die mit den anderen Teilen Kontakt machen, mit Antiverschleissringen, wie Metallringe, versehen ist.

Auf alternative Weise kann das elastische Mittel als eine Spiral- oder Schraubfeder gebildet sein.

Die Erfindung bezieht sich ferner auf einen Abstandshalter, der für die Anwendung im Schalungssystem gemäß Anspruch 1 geeignet ist. Es wird dabei bemerkt, dass die Erfindung sich auch auf Verschalungskonstruktionen erstreckt, in welchen von einer bereits vorhandenen, festen Wand und von einer auf Abstand davon aufgestellten, einzelnen Schalungswand die Rede ist. Die für die Erfindung wesentlichen Massnahmen können dann auch an der Stelle der einen Schalungswand angewendet werden.

Die Erfindung wird nachfolgend anhand einiger in den beigefügten Zeichnungen wiedergegebenen Ausführungsbeispiele erläutert. Gezeigt wird in:
Fig. 1 eine perspektivische, schematische Ansicht, in auseinandergezogenem Zustand, einer Schalungskonstruktion nach dem Giessen des Betons, wobei der Abstandshalter nach der Erfindung verwendet wird;
Figuren 2A-2D ein Detail einer ersten Ausführungsform des Abstandshalters nach der Erfindung, in Ansicht bzw. im Durchschnitt wiedergegeben vor dem Anziehen, im Durchschnitt nach dem Anziehen und zum Schluss in einer alternativen Ausführung nach dem Anziehen, mit einem abweichenden Innenanschlag;
Figuren 3A und 3B eine zweite Ausführungsform des Abstandhalters nach der Erfindung, vor bzw. nach dem Anziehen im Durchschnitt wiedergegeben:
Figuren 4A und 4B eine dritte Ausführungsform des Abstandshalters nach der Erfindung vor bzw. nach dem Anziehen im Durchschnitt wiedergegeben; und
Figuren 5A und 5B eine vierte Ausführungsform des Abstandshalters nach der Erfindung vor bzw. nach dem Anziehen im Durchschnitt wiedergegeben.

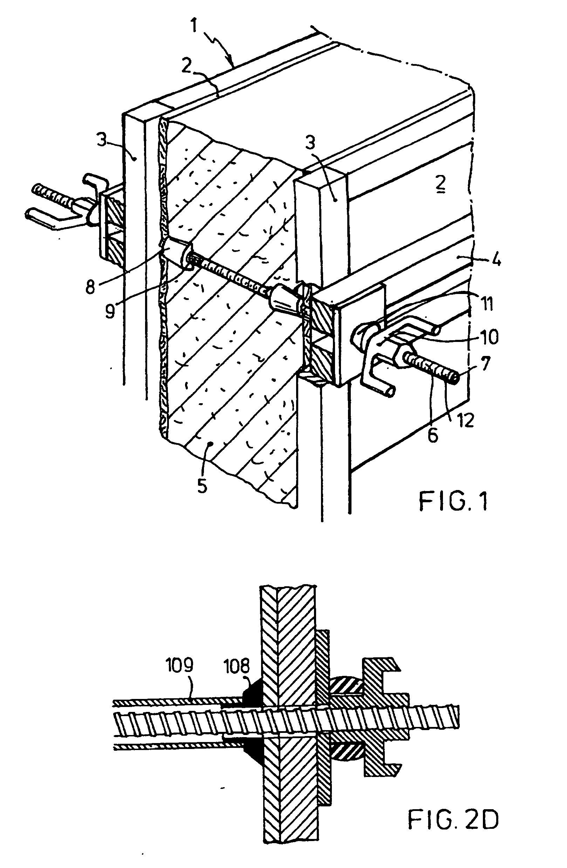

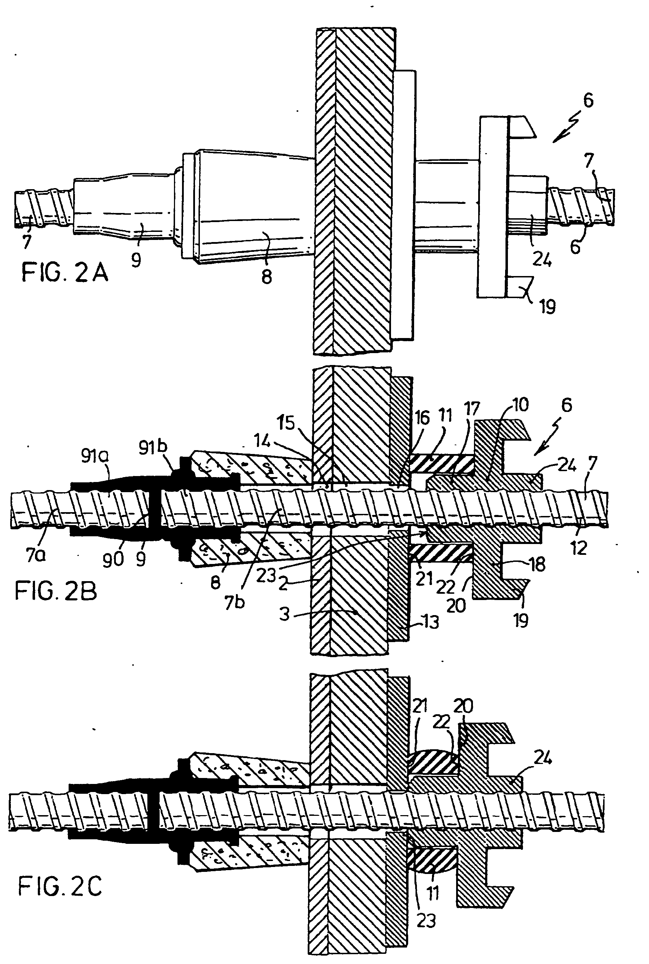

In Figur 1 ist das Schalungsystem 1 wiedergegeben, das im wesentlichen aus zwei Stahlschalungstrennwänden 2 aufgebaut ist, die mit Hilfe von darauf auf nicht näher wiedergegebene Weise befestigten Stahl- oder Aluminiumständern 3 verstärkt sind, welche Ständer mit Hilfe von Stahl- oder Aluminiumholmen 4 untereinander verbunden sein können. In den in den Figuren 2-5 wiedergegebenen Ausführungen sind die Holme 4 ausgelassen.

Beide Schalungstrennwände 2 werden mit Hilfe von Abstandshaltern 6, die aus einer mit einem Gewinde 12 versehenen Zentrierstift 7 aufgebaut sind, auf erwünschtem Abstand von einander gehalten, welches Gewinde eine relative grosse Steigung hat, wie beispielsweise 10 mm. Der Zentrierstift 7 läuft ab der Aussenseite der einen Schalungstrennwand 2 zur Aussenseite der anderen Schalungstrennwand 2. Auf dem Zentrierstift 7 sind innerhalb des mit Beton 5 volgegossen Hohlraumes zwei Mörtelkonusse 8 aufgestellt, die mit ihren axial auswärts gekehrten Oberflächen gegen die Innenoberflächen der Schalungstrennwände 2 anliegen. Der Mörtel- oder Betonkonus ist um die Kunststoffkupplungsmuffe 9 festgegossen, die in der Mitte eine Querwand 90 hat, beidseitig wovon zwei Bohrungen 91a, 91b gelegen sind, die ein Innengewinde haben, das mit dem Gewinde auf dem Zentrierstift 7 zusammenarbeiten kann. Der Zentrierstift 7 ist deshalb aus mehreren Teilen, nämlich ein Mittelteil 7a und zwei Endteilen 7b aufgebaut. An der Aussenseite jeder Schalungswand ist eine Mutter 10 auf dem Gewinde 12 des Zentrierstifts 7 geschraubt, und drückt diese mit einer in Figur 1 nicht näher wiedergegebenen Anschlagsoberfläche gegen die Querträger 4 und damit indirekt gegen Stahlständer 3 und Schalungstrennwand 2. Die Schalungstrennwand 2 wird deshalb an der Innenseite und an der Aussenseite geklemmt gehalten, wobei der Zentrierstift 7a, 7b dafür sorgt, dass beide Schalungstrennwände im richtigen Abstand voneinander gehalten werden.

In den Figuren 2A und 2B ist erläutert, wie ein Ende des Abstandshalters 6 aufgebaut ist. In diesem Fall sind die Querträger 4 ausgelassen worden. Sogenannte stählerne, vollständig flache Folgeplatten 13, die dazu da sind, die Kontaktoberfläche mit den Stahlständern 3 zu vergrössern, sind wohl vorhanden.

In den Figuren 2A und 2C ist zu sehen, dass die Mutter 10 eine speziale Form hat, und mit einem inneren Mutterabschnitt 17 mit vollständig flacher Anschlagsfläche 23 und einem äusseren Mutterabschnitt 24 versehen ist, wobei im Übergangsgebiet zwischen beiden Abschnitten zwei diametral einander gegenüberliegende radiale Flügel 18 vorgesehen sind, von wo sich in axialer, auswärtiger Richtung Angriffsnocken 19 erstrecken, mit welchen die Mutter 10 angegriffen werden kann um sie zu drehen.

Um den inneren Mutterabschitt 17 ist eine Manschette 11 aus Gummi oder einem vergleichbaren Material angeordnet, die mit der axialen äusseren Endfläche 22 gegen die axiale innere Fläche 20 der Flügel 18 kommt. An der axialen inneren Endoberfläche 21 ruht die Gummimanschette 11 gegen die Aussenoberfläche der Folgeplatte 13. Die Manschette kann auf (eng)passende Weise auf den inneren Mutterabschnitt aufgestellt sein, um Aufstellung von der Anordnung Mutter/Manschette zu vereinfachen. Beim Aufsetzen und Abschrauben der Mutter wird die Manschette mitdrehen und gleichsam ein handliches Ganzes mit der Mutter bilden, bis die Reibung zwischen Manschette und Schalung zu gross wird.

Die Mutter 10 ist mit einem Gewinde, das zum groben Gewinde 12 des Zentrierstifts 7 passt, versehen. Der Zentrierstift 7a, 7b erstreckt sich weiter einwärts durch die Bohrung 16 in der Folgeplatte 13 aus, Bohrung 15 in Ständer 3 und Bohrung 14 in Schalungswand 2, sowie durch geeignete durchgehende Öffnungen im Mortelkonus 8 und in der Kupplungsmuffe 9.

Wenn, wie in der in Figur 2B wiedergegebenen Situation, die Mutter 10 weiter auf den Zentrierstift 7 gedreht wird, wird die Gummimanschette 11 in axialer Richtung zusammengedrückt werden. Letztendlich wird der Arbeiter bemerken, dass die in Figur 2C wiedergegebenen Situation erreicht ist, in welcher auch die axiale innere Anschlagsoberfläche 23 der Mutter 10 gegen die Aussenoberfläche der Folgeplatte 13 angekommen ist. In diesem Fall findet die Kraftübertragung zwischen Folgeplatte 13 (und deshalb, indireckt, Schalungswand 2) und dem Zentrierstift 7 auf paralleler Weise via die Gummimanschette 11 und via die Mutter 10 statt. Der Stahl-auf-Stahlkontakt zwischen Mutter und Folgeplatte und deshalb die tangentiale und axiale Position der Mutter 10 auf dem Zentrierstift 7 wird hierbei auch im Falle von heftigen Schwingungen durch die Gummimanschette 11 gewährleistet, die dafür Sorge trägt, dass sowohl in axialer, wie in Umfangsrichtung die Mutter 10 relativ hinsichtlich dem Zentrierstift 7 in Stellung bleiben kann, trotz der groben Steigung des Gewindes 12.

In figur 2D ist die Situation wiedergegeben, die mit Figur 2C vergleichbar ist, jedoch sind die Kupplungsmuffe 9 und der Betonkonus 8 illustrationshalber durch ein Abstandsrohr 109 und durch Kunststoffkonus 108 ersetzt worden. Ein Unterschied mit der Konstruktion nach Figur 2C ist, dass die Zentrierstift 7 durchgehend ist und in der Schalungskonstruktion von der einen Schalungswand zur anderen via das Abstandsrohr 109, und nicht via dem Zentrierstift 7 übertragen werden. An der Aussenseite der Schalungswand kann die Konstruktion allerdings gleich wie die von Figur 2C ausgeführt sein.

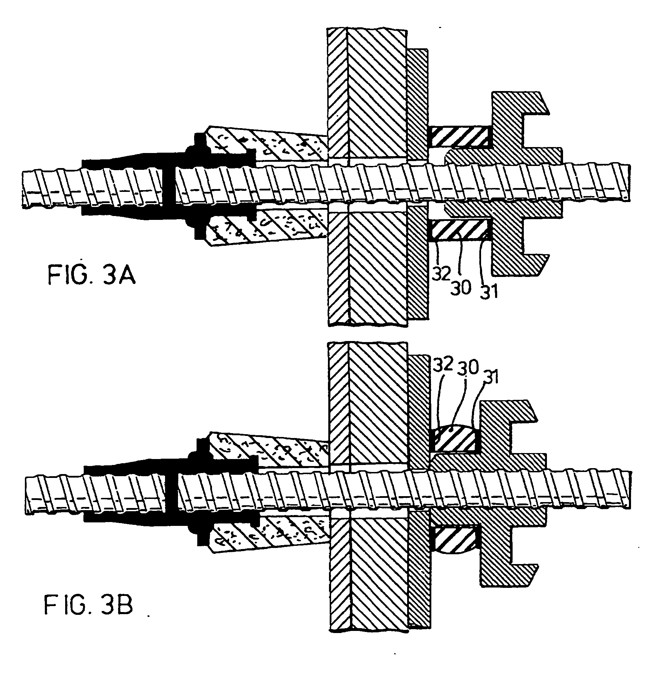

In Figuren 3A und 3B sind Situationen wiedergegeben, die vergleichbar sind mit denen der Figuren 2B und 2C, jedoch ist hierbei die elastischen Manschette 30 einigermassen abweichend und, um Verschleiss vorzubeugen - und deshalb Wiederverwendung zu befördern - an beiden axialen Kontaktflächen mit darauf, auf welche geeignete Weise auch, geklebten Stahlringen 31 bzw. 32 versehen. Auch hier ist die Manschette engpassend auf die Mutter aufgestellt.

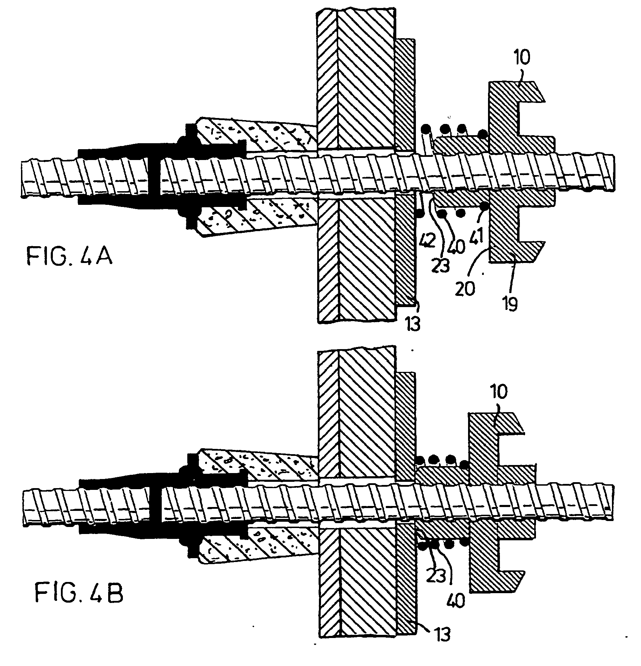

In den Figuren 4A und 4B sind wieder die Situationen wiedergegeben, die mit den Situationen von 2B und 2C übereinstimmen. Die elastische Manschette 11 ist hier allerdings durch eine elastische Spiralfeder 40 ersetzt worden, wovon die äussere Windung 41 einigermassen klemmend gegen die axiale innere Oberfläche 20 der Flügel 18 und der axialen inneren Windung 42 gegen die axiale äussere Oberfläche der Folgeplatte 13 anliegt. Wie in Figur 4B zu sehen ist, wird beim Aufschrauben der Mutter 10 die Feder 40 eingedrückt, bis der innere Mutterabschnitt 17 mit der inneren axialen Anschlagoberfläche 23 gegen die äussere Oberfläche der Folgeplatte 13 kommt.

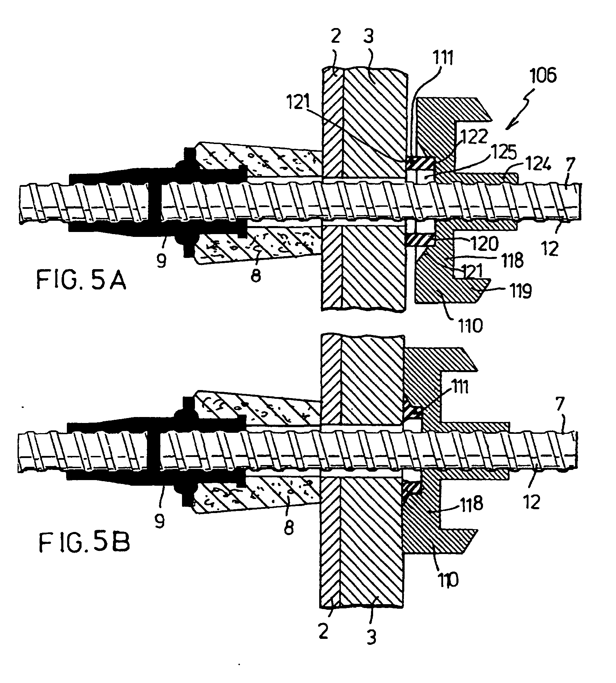

In den Figuren 5A und 5B sind nochmals Situationen wiedergegeben, die mit denen der Figuren 2B und 2C übereinkommen, wobei nun allerdings eine alternative Lösung wiedergegeben ist, wobei das elastische Mittel nicht radial ausserhalb des Mutterteils gelegen ist, jedoch radial darin. In den Ausführungen der Figuren 2-4 funktionierte der innersten Mutterabschnitt zugleich als Träger für das elastische Mittel, in Form einer elastischen Manschette oder einer Spiralfeder. In der Konstruktion nach den Figuren 5A-5B sorgt das Mutterteil für die radiale auswärtige Halterung des elastischen Mittels, das hier die Form eines Ringteils 111 aus Gummi oder einem vergleichbaren Material hat. Das Mutterteil 110 ist ausserdem wiederum mit einem axialen äusseren Mutterabschnitt 124 versehen, der mit einem beim Gewinde 12 mit grober Steigung des Zentrierstifts 7 passenden inneren Gewinde versehen ist. An dem axialen Innenende geht der Mutterabschnitt 124 in einen radialen Flansch 110 über, der mit axialen Angriffsnocken 119 ausgebildet ist. Der Flansch 110 ist nahe der Mitte im axialen Innenende mit einem vertieften Abschnitt 125 versehen, mit einer Stützfläche 20 und einer anschliessend radial schräg nach aussen auflaufenden Fläche 126. Der Gummiring 111 liegt deshalb mit äusserer Endfläche 122 gegen Oberfläche 120 an und mit der axialen Innenendfläche 121 gegen die Aussenoberfläche von Stahlständer 3 an. In der Regel ist in einer solchen Aufstellung keine Folgeplatte nötig, weil die kraftübertragende Oberfläche ausreichend gross sein wird.

Wenn das Mutterteil 110 auf dem Zentrierstift 7 angezogen wird, wird letztendlich die Situation, die in Figur 5B wiedergegeben ist, erreicht werden, in welcher Situation wieder von einer parallelen Kraftübertragung die Rede ist, nämlich auf direkte Weise von Stahlständer 3 auf Mutterteil 110 und auf indirekte Weise via Gummiring 111, von Stahlständer 3 auf Mutterteil 110. Die nach aussen hin abgeschrägte Form der Vertiefung 125 bietet ausserdem Platz an Verformung als Folge des Eindrückens des Gummirings 111. Hierbei wird die Reibungsoberfläche, sowohl mit Folgeplatte wie mit Mutterteil, beträchtlich vergrössert.

## Patentansprüche

1. Schalungssystem (1) für aus Gussbeton zu bildende Bauteile, wie Wände, mit zwei auf Abstand voneinander aufzustellenden Gussbegrenzungswänden (2) und Abstandshaltern (3), die die Gussbegrenzungswände auf erwünschten, gegenseitigen Abstand halten bis der gegossene Beton gehärtet ist, wobei zumindest eine der Gussbegrenzungswände eine vor Ort einzubauende Schalungswand ist, wobei die Abstandshalter Stahlstifte (7) mit einem Gewinde (12) mit relativ grosser Steigung aufweisen, welche Stifte sich in durchgehender Weise durch die zumindest eine Schalungswand erstrecken und daraus mit einem Endabschnitt an der Außenseite hervorragen, wobei die Abstandshalter ferner erste Anschlagmittel (9, 108) für direkten oder indirekten Anschlag gegen die Innenseite der Schalungswand aufweisen und zweite Anschlagmittel (10, 11; 30; 40; 110, 111) für direkten oder indirekten Anschlag gegen die Außenseite der Schalungswand, wobei die ersten und zweiten Anschlagmittel zueinander hin spannbar sind und wobei die zweiten Anschlagmittel eine Mutter (10; 110) - vorzugsweise eine Flügelmutter - aus hartem Material wie Stahl aufweisen, die auf den betreffenden Stift (7) zu schrauben ist und von einem steifen Anschlagabschnitt (17) mit einer Anschlagoberfläche (23) zum Anschlag gegen die Außenseite der Schalungswand versehen ist, **dadurch gekennzeichnet, daß** die zweiten Anschlagmittel auch ein elastisches Mittel (11; 30; 40; 111) aufweisen, das sich in auswärtiger Richtung kraftschlüssig gegen eine Stützfläche (20) auf oder an der Mutter (10; 110) abstützt und sich neben der Anschlagoberfläche (23) und auf Abstand von dem Stift (7) erstreckt, um mit einer Stützfläche (21; 32; 121) direkt oder indirekt gegen die Außenseite der Schalungswand zu stützen.

2. Schalungssystem nach Anspruch 1, wobei die Anschlagoberfläche (23) sich radial innerhalb des elastischen Mittels (11; 30; 40) befindet.

3. Schalungssystem nach Anspruch 2, wobei zwischen der Anschlagoberfläche (23) und der Schalungswand (2) eine harte Anker- oder Folgeplatte (13) aufgestellt ist, die vorzugeweise aus Stahl ist.

4. Schalungssystem nach Anspruch 2 oder 3, wobei die Mutter (10) mit einem Angriffsflügel (18) oder -flansch versehen ist, der auf axialen auswärtigen Abstand von der Anschlagoberfläche (23) gelegen ist und die Mutter zwischen der Anschlagoberfläche und dem Flügel oder dem Flansch einen ersten Mutterabschnitt (17) bestimmt, der vorzugsweise mit einem mit dem Stift zusammenarbeitenden Gewinde versehen ist, wobei das elastische Mittel (11; 30; 40) um den ersten Mutterabschnitt gelegen ist.

5. Schalungssystem nach Anspruch 1, wobei das elastische Mittel (111) radial innerhalb der Anschlagoberfläche gelegen ist.

6. Schalungssystem nach Anspruch 5, wobei die Mutter (110) mit einem gleichzeitig die Anschlagsoberfläche bildenen Angriffsflügel oder -flansch (118) versehen ist.

7. Schalungssystem nach einem der vorgehenden Ansprüche 1-6, wobei das elastische Mittel (11; 30; 111) eine Gummibuchse oder ein Gummiring ist.

8. Schalungssystem nach Anspruch 7, wobei die Gummibuchse oder der Gummiring (30) an der einwärtigen und/oder auswärtigen Oberfläche mit einem Ring (32; 31) aus relativ hartem Material, vorzugsweise Metall, versehen ist.

9. Schalungssystem nach einem der vorgehenden Ansprüche 1-6, wobei das elastische Mittel (40) eine Spiral- oder Schraubfeder ist.

10. Schalungssystem nach einem der vorgehenden Ansprüche, wobei beide Gussbegrenzungswände, die vor Ort aufzustellen sind, Schalungswände (2) sind.

11. Abstandhalter für Anwendung in einem Schalungssystem (1) für aus Gussbeton zu bildende Bauteile, wie Wände, mit zwei auf Abstand voneinander aufzustellenden Gussbegrenzungswänden (2) und Abstaridhaltern (3), die die Gussbegrenzungswände auf erwünschten, gegenseitigen Abstand halten bis der gegossene Beton gehärtet ist, wobei zumindest eine der Gussbegrenzungswände eine vor Ort einzubauende Schalungswand ist, wobei der Abstandhalter einen Stahlstift mit einem Gewinde mit relativ grosser Steigung aufweist, welcher Stift sich in durchgehender Weise durch die zumindest eine Schalungswand erstrecken und daraus mit einem Endabschnitt an der Außenseite hervorragen kann, wobei der Abstandhalter ferner ein erstes Anschlagmittel (9, 108) für direkten oder indirekten Anschlag gegen die Innenseite der Schalungswand und ein zweites Anschlagmittel (10, 11; 30; 40; 110, 111) für direkten oder indirekten Anschlag gegen die Außenseite der Schalungswand aufweist, wobei die ersten und zweiten Anschlagmittel zueinander hin spannbar sind und wobei das zweite Anschlagmittel eine Mutter (10; 110) - vorzugsweise eine Flügelmutter - aus hartem Material wie Stahl aufweist, die auf den betreffenden Stift (7) zu schrauben ist und von einem steifen Anschlagabschnitt (17) mit einer Anschlagoberfläche (23) zum Anschlag gegen die Außenseite der Schalungswand versehen ist, **dadurch gekennzeichnet, daß** das zweite Anschlagmittel auch ein elastisches Mittel (11; 30; 40; 111) aufweist, das sich in auswärtiger Richtung kraftschlüssig gegen eine Stützfläche (20) auf oder an der Mutter (10; 110) abstützt und sich neben der Anschlagoberfläche (23) und auf Abstand von dem Stift (7) erstreckt um mit einer Stützfläche (21; 32; 121)) direkt oder indirekt gegen die Außenseite der Schalungswand zu stützen.

## Claims

1. Shuttering system (1) for construction parts, such as walls, to be formed out of poured concrete, comprising two pouring limitation walls (2) to be positioned spaced apart and spacers (3) that keep the pouring limitation walls at the desired distance from each other until the poured concrete has hardened, wherein at least one of the pouring limitation walls is a shuttering wall to be installed at the site, wherein the spacers comprise steel pins (7) having a thread (12) of a relatively large pitch, which pins extend continuously through the at least one shuttering wall and project therefrom at the outside with an end portion, wherein the spacers further comprise first stopping means (9; 108) for directly or indirectly stopping against the inner wall of the shuttering wall and second stopping means (10, 11; 30; 40; 110, 111) for directly or indirectly stopping against the outside of the shuttering wall, wherein the first and second stopping means can be biassed towards each other and wherein the second stopping means comprise a nut (10; 110), preferably a wing nut, of hard material such as steel, which can be screwed onto the pin (7) in question and is provided with a rigid stop section (17) having a stop surface (23) for stopping against the outside of the shuttering wall, **characterised in that** the second stopping means are also provided with a resilient member (11; 30; 40; 111) which in outward direction force-closingly supports against a support surface (20) on or at the nut (10; 110) and extends adjacent to the stop surface (23) and spaced apart from the pin (7) in order to directly or indirectly support with a support surface (21; 32; 121) against the outside of the shuttering wall.

2. Shuttering system according to claim 1, wherein the stop surface (23) is situated radially inside the resilient member (11; 30; 40).

3. Shuttering system according to claim 2, wherein a hard anchoring plate or following plate (13) has been placed between the stop surface (23) and the shuttering wall (2), which plate is preferably made of steel.

4. Shuttering system according to claim 2 or 3, wherein the nut (10) is provided with an engagement wing (18) or engagement flange, which is positioned at axial outward distance from the stop surface (23) and the nut defines a first nut section (17) between the stop surface and the wing or flange, which section preferably is provided with thread cooperating with the pin, wherein the resilient member (11; 30; 40) is situated around the first nut section.

5. Shuttering system according to claim 1, wherein the resilient member (111) is situated radially within the stop surface.

6. Shuttering system according to claim 5, wherein the nut (110) is provided with an engagement wing or engagement flange (118), that also forms the stop surface.

7. Shuttering system according to any one of the claims 1-6, wherein the resilient member (11; 30; 111) is a rubber bush or rubber ring.

8. Shuttering system according to claim 7, wherein the rubber bush or rubber ring (30) is provided with a ring (32; 31) of relatively hard material, preferably metal, at the inward and/or outward surface.

9. Shuttering system according to any one of the claims 1-6, wherein the resilient member (40) is a coiled spring or helical spring.

10. Shuttering system according to any one of the preceding claims, wherein both pouring limitation walls are shuttering walls (2) to be installed at the site.

11. Shuttering system (1) for construction parts, such as walls, to be formed out of poured concrete, comprising two pouring limitation walls (2) to be positioned spaced apart and spacers (3) that keep the pouring limitation walls at the desired distance from each other until the poured concrete has hardened, wherein at least one of the pouring limitation walls is a shuttering wall to be installed at the site, wherein the spacer comprises a steel pin (7) having a thread (12) of a relatively large pitch, which pin extends continuously through the at least one shuttering wall and may project therefrom at the outside with an end portion, wherein the spacer further comprises a first stopping means (9; 108) for directly or indirectly stopping against the inner wall of the shuttering wall and a second stopping means (10, 11; 30; 40; 110, 111) for directly or indirectly stopping against the outside of the shuttering wall, wherein the first and second stopping means can be biassed towards each other and wherein the second stopping means comprises a nut (10; 110), preferably a wing nut, of hard material such as steel, which can be screwed onto the pin (7) in question and is provided with a rigid stop section (17) having a stop surface (23) for stopping against the outside of the shuttering wall, **characterised in that** the second stopping means is also provided with a resilient member (11; 30; 40; 111) which in outward direction force-closingly supports against a support surface (20) on or at the nut (10; 110) and extends adjacent to the stop surface (23) and spaced apart from the pin (7) in order to directly or indirectly support with a support surface (21; 32; 121) against the outside of the shuttering wall.

## Revendications

1. Système de coffrage (1) pour éléments de construction destinés à être fabriqués en béton coulé, comme des parois, comprenant deux parois de délimitation de coulée (2) destinées à être installées à distance l'une de l'autre et des écarteurs (3), qui maintiennent les parois de délimitation de coulée à une distance mutuelle souhaitée jusqu'à ce que le béton coulé ait durci, au moins une des parois de délimitation de coulée étant une paroi de coffrage destinée à être montée sur place, les écarteurs comprenant des pointes toc (7) dotées d'un filet (12) présentant un pas relativement important, lesquelles pointes s'étendent de manière continue à travers la au moins une paroi de coffrage et en dépassent avec une section d'extrémité sur le côté extérieur, les écarteurs comprenant en outre des premiers moyens formant butée (9, 108) pour une butée directe ou indirecte contre la face interne de la paroi de coffrage et deux moyens formant butée (10, 11 ; 30 ; 40 ; 110, 111) pour une butée directe ou indirecte contre la face externe de la paroi de coffrage, les premiers et seconds moyens formant butée pouvant être tendus les uns vers les autres et les seconds moyens formant butée comprenant un écrou (10; 110) -de préférence un écrou à oreilles- en matériau dur comme de l'acier, qui doit être vissé sur la pointe (7) en question et est pourvu depuis une section de butée (17) rigide d'une surface de butée en vue d'une butée contre la face externe de la paroi de coffrage, **caractérisé en ce que** les seconds moyens formant butée comprennent également un moyen élastique (11 ; 30 ; 4 ; 111), qui s'appuie dans la direction extérieure par coopération de forces contre une surface d'appui (20) sur l'écrou (10 ; 110) et s'étend à côté de la surface de butée (23) et à distance de la pointe (7), afin d'appuyer avec une surface d'appui (21 ; 32 ; 122) directement ou indirectement contre la face externe de la paroi de coffrage.

2. Système de coffrage selon la revendication 1, la surface de butée (23) se situant dans le sens radial à l'intérieur du moyen élastique (11 ; 30 ; 40).

3. Système de coffrage selon la revendication 2, une plaque d'ancrage ou séquentielle (13) étant installée entre la surface de butée (23) et la paroi de coffrage (2), laquelle plaque est de préférence en acier.

4. Système de coffrage selon la revendication 2 ou 3, l'écrou (10) étant pourvu d'une aile ou bride d'attaque (18), qui est posée à distance extérieure axiale de la surface de butée (23) et l'écrou entre la surface de butée et l'aile ou la bride définissant une première section d'écrou (17), qui est pourvue de préférence d'un filet coopérant avec la pointe, le moyen élastique (11 ; 30 ; 40) étant posé autour de la première section d'écrou.

5. Système de coffrage selon la revendication 1, le moyen élastique (111) étant posé dans le sens radial à l'intérieur de la surface de butée.

6. Système de coffrage selon la revendication 5, l'écrou (110) étant pourvu d'une aile ou bride d'attaque (118) formant simultanément la surface de butée.

7. Système de coffrage selon l'une quelconque des revendications 1 à 6, le moyen élastique (11 ; 30 ; 11) étant une douille en caoutchouc ou un anneau en caoutchouc.

8. Système de coffrage selon la revendication 7, la douille en caoutchouc ou l'anneau en caoutchouc (30) étant pourvu(e) sur la surface intérieure et/ou extérieure d'un anneau (32 ; 31) en matériau relativement dur, de préférence en métal.

9. Système de coffrage selon l'une quelconque des revendications 1 à 6, le moyen élastique (40) étant un ressort en spirale ou hélicoïdal.

10. Système de coffrage selon l'une quelconque des revendications précédentes, les deux parois de délimitation de coulée, qui doivent être installées sur place, étant des parois de coffrage (2).

11. Ecarteur pour une utilisation dans un système de coffrage (1) pour éléments de construction destinés à être fabriqués en béton coulé, comme des parois, comprenant deux parois de délimitation de coulée (2) destinées à être installées à distance l'une de l'autre et des entretoises (3), qui maintiennent les parois de délimitation de coulée à distance mutuelle souhaitée jusqu'à ce que le béton coulé ait durci, au moins une des parois de délimitation de coulée étant une paroi de coffrage destinée à être montée sur place, l'écarteur comprenant une pointe toc dotée d'un filet présentant un pas relativement important, laquelle pointe peut s'étendre de manière continue à travers la au moins une paroi de coffrage et en dépasser avec une section d'extrémité sur le côté extérieur, l'écarteur comprenant en outre un premier moyen formant butée (9, 108) pour une butée directe ou indirecte contre la face interne de la paroi de coffrage et un second moyen formant butée (10, 11 ; 30 ; 40 ; 110, 111) pour une butée directe ou indirecte contre la face externe de la paroi de coffrage, les premier et second moyens formant butée pouvant être tendus l'un vers l'autre et le second moyen formant butée comprenant un écrou (10 ; 110) -de préférence un écrou à oreilles- en matériau dur comme de l'acier, qui doit être vissé sur la pointe (7) en question et est pourvu depuis une section de butée (17) rigide d'une surface de butée en vue d'une butée (23) contre la face externe de la paroi de coffrage, **caractérisé en ce que** le second moyen formant butée comprend également un moyen élastique (11 ; 30 ; 4 ; 111), qui s'appuie dans la direction extérieure par coopération de forces contre une surface d'appui (20) sur l'écrou (10 ; 110) et s'étend à côté de la surface de butée (23) et à distance de la pointe (7), afin d'appuyer avec une surface d'appui (21 ; 32 ; 122) directement ou indirectement contre la face externe de la paroi de coffrage.
